# EUROPÄISCHE PATENTSCHRIFT

(11) **EP 3 623 060 B1**
(45) Veröffentlichungstag und Bekanntmachung des Hinweises auf die Patenterteilung: **07.09.2022**
(21) Anmeldenummer: 18194802.7
(22) Anmeldetag: 17.09.2018
(51) Int. Cl.: B07C 3/08

(54) **VERFAHREN ZUM SORTIEREN VON OBJEKTEN SOWIE SORTIERANLAGE**
METHOD FOR SORTING OF OBJECTS AND SORTING INSTALLATION
PROCÉDÉ DE TRI D'OBJETS AINSI QU'INSTALLATION DE TRI

(43) Veröffentlichungstag der Anmeldung: 18.03.2020
(73) Patentinhaber: Siemens Aktiengesellschaft, 80333 München (DE); Deutsche Post AG, 53113 Bonn (DE)
(72) Erfinder: BECHER, Jörn, 55127 Mainz (DE); HARTMANN, Bernd, 53501 Grafschaft-Leimersdorf (DE); KLINK, Reinhard, 78333 Stockach (DE)
(74) Vertreter: Maier, Daniel Oliver

(56) Entgegenhaltungen:
- WO-A1-99/21663
- DE-A1- 19 709 232
- US-A1- 2007 090 028

## Beschreibung

Die Erfindung betrifft ein Verfahren zum Sortieren von Objekten in einer Sortieranlage. Ferner betrifft die Erfindung eine Sortieranlage zum Sortieren von Objekten.

Sortieranlagen, wie sie beispielsweise in Paket- oder Versandzentren vorhanden sind, umfassen üblicherweise einen oder mehrere Sorter sowie eine Mehrzahl von Endstellen. In den Endstellen einer Sortieranlage werden die von einem Sorter auf die Endstellen verteilten Objekte bis zum nächsten Verarbeitungsschritt, wie zum Beispiel dem Einladen der Objekte in Rollbehälter für deren Weitertransport, zwischengelagert.

WO-A-99/21663 offenbart eine Vorrichtung zum Sortieren von codierten Artikeln, wobei Artikel die nicht sauber gescannt werden, durch einen Rezyklierförderer zurück geleitet werden.

Objekte, die in derselben Endstelle zwischengelagert werden, sind typischerweise für dasselbe Ziel(-gebiet), wie zum Beispiel für ein vorgegebenes Paket-/Versandzentrum oder für einen vorgegebenen Zustellbezirk, bestimmt, wobei die Objekte grundsätzlich nach einem beliebigen anderen Kriterium als ihrem jeweiligen Ziel(-gebiet) auf die Endstellen verteilt werden können. Innerhalb einer Endstelle sind die Objekte üblicherweise chaotisch verteilt. In der jeweiligen Endstelle liegt also insbesondere keine Feinverteilung der Objekte nach weiteren Kriterien (wie zum Beispiel den Zieladressen und/oder den Abmessungen der Objekte) vor.

Aufgrund immer weiter zunehmender Mengen an Objekten, die von Sortieranlagen zu verarbeiten sind, besteht grundsätzlich zunehmender Bedarf danach, die Objekte in einer Sortieranlage feiner zu verteilen, insbesondere die Objekte nach einer größeren Anzahl von Zielen/Zielgebieten zu sortieren. Jedoch kann der Bedarf an Endstellen die Anzahl der verfügbaren Endstellen einer Sortieranlage übersteigen. Ein Ansatz zur Lösung dieses Problems sieht vor, in die Sortieranlage zusätzliche Endstellen einzubauen, sodass die Objekte auf eine größere Anzahl von Endstellen verteilt werden können.

Die Anzahl realisierbarer Endstellen einer Sortieranlage hängt unter anderem vom zur Verfügung stehenden Platz sowie von der Länge des jeweiligen Sorters ab. Meist ist die Anzahl realisierbarer Endstellen bereits ausgereizt, sodass der Einbau zusätzlicher Endstellen nicht möglich ist.

Eine Aufgabe der Erfindung ist es, in einer Sortieranlage zum Sortieren von Objekten aufwandsgünstig eine Feinverteilung der Objekte, insbesondere nach Zielgebieten, zu ermöglichen.

Diese Aufgabe wird erfindungsgemäß gelöst durch ein Verfahren nach Anspruch 1 sowie durch eine Sortieranlage nach Anspruch 10.

Bevorzugte Ausgestaltungen der Erfindung sind in den weiteren Patentansprüchen sowie in der nachfolgenden Beschreibung angegeben.

Bei dem erfindungsgemäßen Verfahren zum Sortieren von Objekten in einer Sortieranlage nach einem der Vorrichtungsansprüche werden Objekte auf einem Sorter der Sortieranlage befördert. Des Weiteren werden in einem ersten Verteildurchlauf einige der auf dem Sorter beförderten Objekte vom Sorter in Entnahmeendstellen der Sortieranlage und andere der auf dem Sorter beförderten Objekte vom Sorter in eine Sammelendstelle der Sortieranlage eingebracht. Außerdem werden mittels einer Transportvorrichtung der Sortieranlage Objekte aus der Sammelendstelle automatisch abtransportiert und automatisch zum Sorter zurückgebracht, wobei die mittels der Transportvorrichtung aus der Sammelendstelle zum Sorter zurückgebrachten Objekte in einem zweiten Verteildurchlauf vom Sorter jeweils in eine der Endstellen eingebracht werden.

Die Erfindung beruht auf folgender Erkenntnis: Stehen N Endstellen für eine Feinverteilung von Objekten zur Verfügung, ist aber eine Feinverteilung der Objekte in M Gruppen gewünscht, wobei M > N ist, so lässt sich eine solche Feinverteilung (ohne den Einbau zusätzlicher Endstellen in die Sortieranlage) realisieren, wenn die Objekte in mehreren Verteildurchläufen auf die Endstellen verteilt werden. Anders ausgedrückt, die gewünschte Feinverteilung lässt sich (ohne den Einbau zusätzlicher Endstellen in die Sortieranlage) realisieren, wenn ein und dieselbe Endstelle mehrfach für eine Sortierung der Objekte genutzt wird. Im ersten Verteildurchlauf können einige der Objekte mittels des Sorters auf einige der N Endstellen (beispielsweise auf N-1 Endstellen) verteilt werden, während mindestens eine der Endstellen (vorliegend als Sammelendstelle bezeichnet) dazu genutzt wird, die übrigen Objekte zwischenzuspeichern, bevor diese Objekte zum Sorter zurückgebracht werden und mittels des Sorters im zweiten Verteildurchlauf auf einige oder alle der Endstellen verteilt werden.

Dadurch, dass Objekte aus der Sammelendstelle mithilfe der Transportvorrichtung automatisch abtransportiert und automatisch zum Sorter zurückgebracht werden, entfällt ein manueller Aufwand für das Abtransportieren und Zurückbringen dieser Objekte. Insbesondere kann darauf verzichtet werden, die in die Sammelendstelle eingebrachten Objekte in Transportcontainern, wie zum Beispiel Rollbehältern, manuell zurück zum Sorter zurückzubringen. Durch den auf die Transportvorrichtung zurückführbaren Entfall manueller Handlingsaufwände können zudem Prozesszeiten für die Sortierung der Objekte verringert werden.

Im Sinne der vorliegenden Erfindung handelt es sich bei "Objekten" um sortierbare Gegenstände, die von einem Ort zu einem anderen Ort (einem Zielort) zu bringen sind. Hierbei kann es sich unter anderem um Sendungen handeln. Insbesondere können die in der Sortieranlage zu sortierenden Objekte Postsendungen, wie zum Beispiel Packstücke, Pakete, Päckchen, Briefe oder dergleichen, sein.

Das Zurückbringen von Objekten aus der Sammelendstelle zu dem Sorter mittels der Transportvorrichtung muss nicht notwendigerweise allein durch die Transportvorrichtung erfolgen. Beispielsweise kann zwischen der Transportvorrichtung und dem Sorter eine andere Vorrichtung angeordnet sein, über welche Objekte von der Transportvorrichtung automatisch zum Sorter transportiert werden. Mit anderen Worten, die Formulierung, dass Objekte aus der Sammelendstelle mittels der Transportvorrichtung zum Sorter zurückgebracht werden, schließt den Fall ein, dass Objekte mittels der Transportvorrichtung nicht unmittelbar zum Sorter zurückgebracht werden, sondern beispielsweise zu einer zwischen der Transportvorrichtung und dem Sorter angeordneten Vorrichtung, welche die Objekte automatisch zum Sorter weitertransportiert.

In bevorzugter Weise wird jedes der auf Sorter beförderten Objekte im ersten Verteildurchlauf vom Sorter entweder in eine der Entnahmeendstellen oder in die Sammelendstelle eingebracht.

Ferner ist es bevorzugt, wenn die mittels der Transportvorrichtung zum Sorter zurückgebrachten Objekte im zweiten Verteildurchlauf vom Sorter jeweils in eine der Entnahmeendstellen oder in die Sammelendstelle eingebracht werden. Abhängig von der Anzahl der für eine gewünschte Feinverteilung benötigten Endstellen können die zum Sorter zurückgebrachten Objekte, die im zweiten Verteildurchlauf vom Sorter auf die Entnahmeendstellen verteilt werden, entweder auf alle der Entnahmeendstellen oder nur auf einige Entnahmeendstellen verteilt werden.

Zweckmäßigerweise sind den Entnahmeendstellen beim ersten Verteildurchlauf vorgegebene Zielgebiete zugeordnet. Bei den Zielgebieten kann es sich jeweils zum Beispiel um ein vorgegebenes Paket-/Versandzentrum oder einen vorgegebenen Zustellbezirk handeln. Bei einer bevorzugten Erfindungsvariante sind einigen oder allen der Entnahmeendstellen beim zweiten Verteildurchlauf andere vorgegebene Zielgebiete zugeordnet als beim ersten Verteildurchlauf.

Vorzugsweise werden einige oder alle der mittels der Transportvorrichtung zum Sorter zurückgebrachten Objekte im zweiten Verteildurchlauf vom Sorter in die Entnahmeendstellen eingebracht.

Ferner ist es vorteilhaft, wenn einige oder alle der Entnahmeendstellen entladen werden, bevor die aus der Sammelendstelle zum Sorter zurückgebrachten Objekte im zweiten Verteildurchlauf vom Sorter in die Entnahmeendstellen eingebracht werden, insbesondere um zu vermeiden, dass Objekte im zweiten Verteildurchlauf in eine Entnahmeendstelle eingebracht werden, in welcher sich noch Objekte vom ersten Verteildurchlauf befinden.

Das Entladen der jeweiligen Entnahmeendstelle kann beispielsweise von Hand erfolgen. Alternativ kann das Entladen der jeweiligen Entnahmeendstelle automatisiert erfolgen.

Bei einer vorteilhaften Ausführungsvariante der Erfindung werden die aus der Sammelendstelle abtransportierten Objekte von der Transportvorrichtung unmittelbar zum Sorter zurückgebracht. Dadurch kann insbesondere eine erneute Durchführung von Prozessschritten, welche durchgeführt werden, bevor das jeweilige Objekt erstmalig auf den Sorter gebracht wird, wie zum Beispiel eine Vorsortierung auf einem dem Sorter vorgeschalteten (Vor-)Sorter, vermieden werden.

In bevorzugter Weise wird von einer Lesevorrichtung der Sortieranlage eine Sortierinformation des jeweiligen aus der Sammelendstelle abtransportierten Objekts gelesen, bevor dieses Objekt im zweiten Verteildurchlauf vom Sorter in eine der Endstellen eingebracht wird.

Unter der Sortierinformation eines Objekts ist eine Information zu verstehen, anhand welcher das Objekt einer der Endstellen der Sortieranlage zugeordnet/zugewiesen werden kann.

Die Sortierinformation des jeweiligen Objekts kann insbesondere eine Ziel-/Empfängeradresse des Objekts umfassen. Zweckmäßigerweise ist die Sortierinformation des jeweiligen Objekts außen am Objekt angebracht. Die Sortierinformation des jeweiligen Objekts kann insbesondere in codierter Form, beispielsweise in Form eines Barcodes, vorliegen.

Vorzugsweise wird die Sortierinformation des jeweiligen aus der Sammelendstelle abtransportierten Objekts gelesen, wenn sich das jeweilige Objekt auf dem Sorter befindet. Zum Lesen der Sortierinformation kann hierbei zum Beispiel eine gegebenenfalls vorhandene Lesevorrichtung des Sorters verwendet werden. Auf eine separate Lesevorrichtung, welche die Sortierinformation des jeweiligen aus der Sammelendstelle abtransportierten Objekts liest, während sich diese auf der Transportvorrichtung befindet, kann in diesem Fall verzichtet werden.

Zweckmäßigerweise wird der Sorter von einer Steuereinheit gesteuert. Weiter ist es zweckmäßig, wenn besagte Lesevorrichtung die von ihr gelesene Sortierinformation des jeweiligen auf dem Sorter beförderten Objekts an die Steuereinheit sendet. In bevorzugter Weise steuert die Steuereinheit in Abhängigkeit von der jeweiligen Sortierinformation, in welche der Endstellen der Sorter das jeweilige Objekt einbringt.

Ferner kann vorgesehen sein, dass diejenigen Objekte, die mittels der Transportvorrichtung aus der Sammelendstelle abtransportiert werden, zunächst als Massenstrom (auch Bulk-Strom genannt) aus der Sammelendstelle abtransportiert werden und der Massenstrom mittels eines Singulators (also einer Vereinzelungsvorrichtung) in einen vereinzelten Strom von Objekten umgewandelt wird.

Bei einem Massenstrom von Objekten sind die Objekte bezüglich ihrer jeweiligen Ausrichtung ungeordnet und weisen keine einheitlichen Abstände zueinander auf. Bei einem vereinzelten Strom von Objekten hingegen haben die Objekte zumindest annähernd einen einheitlichen Abstand zueinander sowie zumindest annähernd eine einheitliche Ausrichtung. Die Vereinzelung (d. h. die Umwandlung des Massenstroms in einen vereinzelten Strom von Objekten) kann insbesondere das Lesen einer Sortierinformation des jeweiligen Objekts sowie die Verteilung der Objekte auf die einzelnen Endstellen erleichtern. Zweckmäßigerweise erfolgt die Vereinzelung bevor die aus der Sammelendstelle abtransportierten Objekte erneut auf den Sorter gelangen.

In die Sammelendstelle eingebrachte Objekte können in einem Speicherbereich der Sammelendstelle temporär gespeichert werden. Vorzugsweise werden diese Objekte anschließend für den zweiten Verteildurchlauf von einer Fördereinheit der Sammelendstelle automatisch zur Transportvorrichtung befördert. Dadurch kann auf ein manuelles Umladen von im Speicherbereich gespeicherten Objekten auf die Transportvorrichtung verzichtet werden.

Objekte, die im zweiten Verteildurchlauf vom Sorter in die Sammelendstelle eingebracht werden, können gegebenenfalls mittels der Transportvorrichtung erneut automatisch aus der Sammelendstelle abtransportiert und automatisch zum Sorter zurückgebracht werden. Anschließend können diese Objekte in einem dritten Verteildurchlauf vom Sorter jeweils in eine der Endstellen eingebracht werden. Je nach Bedarf an Endstellen für eine gewünschte Feinverteilung der Objekte kann dieser Vorgang gegebenenfalls ein oder mehrere weitere Male wiederholt werden.

Wie eingangs erwähnt, betrifft die Erfindung unter anderem eine Sortieranlage zum Sortieren von Objekten. Die erfindungsgemäße Sortieranlage umfasst mehrere Entnahmeendstellen, eine Sammelendstelle sowie einen Sorter zum Fördern von Objekten, welcher dazu eingerichtet ist, auf dem Sorter beförderte Objekte jeweils in eine der Endstellen einzubringen. Darüber hinaus umfasst die erfindungsgemäße Sortieranlage eine Transportvorrichtung zum automatischen Abtransportieren von Objekten aus der Sammelendstelle sowie zum automatischen Zurückbringen dieser Objekte zum Sorter, wobei Objekte aus der Sammelendstelle mittels der Transportvorrichtung zu einem Abschnitt des Sorters bringbar sind, von dem aus diese Objekte vom Sorter jeweils in eine der Endstellen einbringbar sind.

Weiter oben im Zusammenhang mit dem erfindungsgemäßen Verfahren beschriebene Ausführungsformen, Ausführungsdetails und Vorteile können sich auch auf die erfindungsgemäße Sortieranlage beziehen.

Zweckmäßigerweise ist die erfindungsgemäße Sortieranlage zur Durchführung des erfindungsgemäßen Verfahrens geeignet. Bei der im Zusammenhang mit dem erfindungsgemäßen Verfahren genannten Sortieranlage kann es sich insbesondere um die erfindungsgemäße Sortieranlage handeln.

Die Sortieranlage kann unter anderem Bestandteil eines Paket- oder Versandzentrums sein. Bei den besagten Endstellen der Sortieranlage kann es sich insbesondere um sogenannte Nahendstellen (auch B-Endstellen genannt) handeln. Alle oder einige der Endstellen können in einer Reihe nebeneinander, insbesondere aneinander angrenzend, angeordnet sein.

Die Sammelendstelle kann baugleich zu mindestens einer der Entnahmeendstellen ausgebildet sind. Alternativ kann die Sammelendstelle anders als die Entnahmeendstellen ausgebildet sein. Im letztgenannten Fall kann die Sammelendstelle zum Beispiel eine größere Speicherkapazität für Objekte aufweisen als die Entnahmeendstellen. Die Entnahmeendstellen sind vorzugsweise baugleich zueinander ausgebildet.

Vorteilhafterweise sind die Endstellen zumindest zum Teil unterhalb des Sorters angeordnet. Anders ausgedrückt, die Endstellen sind vorteilhafterweise zumindest zum Teil tiefer gelegen als der Sorter. Dadurch ist es insbesondere möglich, Objekte unter Einfluss der Schwerkraft vom Sorter zum Auslassbereich der jeweiligen Sammelendstelle zu transportieren.

Bei einer bevorzugten Ausgestaltung der Erfindung weist die Transportvorrichtung einen Singulator zum Vereinzeln von Objekten auf.

Darüber hinaus kann der Sorter der Sortieranlage eine Lesevorrichtung zum Lesen einer Sortierinformation eines Objekts aufweisen. Die Lesevorrichtung kann unter anderem ein Barcode-Lesegerät sein oder ein solches Gerät umfassen.

Vorzugsweise weist die Transportvorrichtung einen Objekteinlassabschnitt sowie einen Objektauslassabschnitt auf. Der Objekteinlassabschnitt ist vorteilhafterweise zumindest annähernd in der gleichen Höhe angeordnet wie der Auslassbereich der Sammelendstelle. Dadurch können beispielsweise Objekte von der Sammelendstelle auf die Transportvorrichtung gleiten, ohne große Höhenunterschiede überwinden zu müssen, sodass Schäden an den Objekten vermieden werden können.

Der Objektauslassabschnitt der Transportvorrichtung ist auf einem höheren Niveau angeordnet als der Objekteinlassabschnitt. In diesem Fall umfasst die Transportvorrichtung einen höhengängigen Förderer mit einem Förderantrieb. Eine solche Ausgestaltung der Transportvorrichtung ermöglicht es beispielsweise, Objekte mittels der Transportvorrichtung zum Sorter zurückzubringen, wenn der Sorter auf einem höheren Niveau angeordnet ist als der Auslassbereich der Sammelendstelle.

Unter einem höhengängigen Förderer ist vorliegend ein Förderer zu verstehen, welcher dazu eingerichtet ist, einen Gegenstand von einem ersten Höhenniveau auf ein zweites Höhenniveau bringen, welches oberhalb des ersten Höhenniveaus liegt. Der höhengängige Förderer der Transportvorrichtung kann zum Beispiel als Band- oder Rollenförderer ausgebildet sein.

In bevorzugter Weise ist die Transportvorrichtung dazu eingerichtet, Objekte aus der Sammelendstelle unmittelbar zum Sorter zurückzubringen. Dies kann durch eine Positionierung des Objektauslassabschnitts der Transportvorrichtung am Sorter erreicht werden.

Weiter kann die Transportvorrichtung dazu eingerichtet sein, Objekte unmittelbar aus der Sammelendstelle aufzunehmen. Dies kann durch eine Positionierung des Objekteinlassabschnitts der Transportvorrichtung an der Sammelendstelle erreicht werden.

Die Sammelendstelle weist vorzugsweise mindestens einen Speicherbereich zur Aufnahme von Objekten auf. Bei einer bevorzugten Ausgestaltung der Erfindung umfasst der Speicherbereich einen anheb- und absenkbaren Boden. Dies ermöglicht es, die Speicherkapazität der Sammelendstelle variabel einzustellen. Der anheb- und absenkbare Boden kann beispielsweise schwenkbar gelagert oder translatorisch höhenverstellbar gelagert sein.

Unter einer translatorisch höhenverstellbaren Lagerung des Bodens ist vorliegend eine Lagerung zu verstehen, bei welcher der Boden durch eine Translationsbewegung seine Höhenposition ändern kann.

Weiter ist es vorteilhaft, wenn der anheb- und absenkbare Boden eine Fördereinheit zum Fördern von Objekten zu der Transportvorrichtung umfasst. Diese Fördereinheit kann beispielsweise ein mit einem Förderantrieb ausgestatteter Förderer, wie zum Beispiel ein Gurt- oder Rollenförderer, sein. Alternativ kann die Fördereinheit ein Schwerkraftförderer, beispielsweise ein Rollenbahn ohne Antrieb oder eine Rutsche, sein.

Die Sammelendstelle kann insbesondere mehrere Speicherbereiche der zuvor beschriebenen Art aufweisen, zum Beispiel einen einlassseitigen Speicherbereich sowie einen auslassseitigen Speicherbereich.

Gegebenenfalls kann die Sortieranlage mehrere Sammelendstellen aufweisen. Diese können insbesondere baugleich zueinander ausbildet sein. Die Transportvorrichtung kann dazu eingerichtet sein, Objekte aus der jeweiligen Sammelendstelle automatisch abzutransportieren sowie automatisch zu einem Abschnitt des Sorters zu bringen, von dem aus diese Objekte vom Sorter jeweils in eine der Endstellen einbringbar sind.

Der besagte Sorter der Sortieranlage ist vorzugsweise ein sogenannter Hauptsorter. Beispielsweise kann der Sorter als Kippschalensorter oder als Quergurtsorter ausgebildet sein. Zusätzlich zu dem zuvor erwähnten Sorter kann die Sortieranlage einen oder mehrere weitere Sorter aufweisen. Insbesondere kann die Sortieranlage mehrere unterschiedliche Typen von Sortern, wie zum Beispiel einen oder mehrere Hauptsorter sowie einen oder mehrere Vorsorter, umfassen.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Sortieranlage kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein erstes Ausführungsbeispiel einer erfindungsgemäßen Sortieranlage in einer Draufsicht;
- FIG 2: eine Seitenansicht der Sortieranlage aus FIG 1 in einem ersten Zustand;
- FIG 3: eine Seitenansicht der Sortieranlage aus FIG 1 und FIG 2 in einem zweiten Zustand;
- FIG 4: ein zweites Ausführungsbeispiel einer erfindungsgemäßen Sortieranlage in einer Seitenansicht.

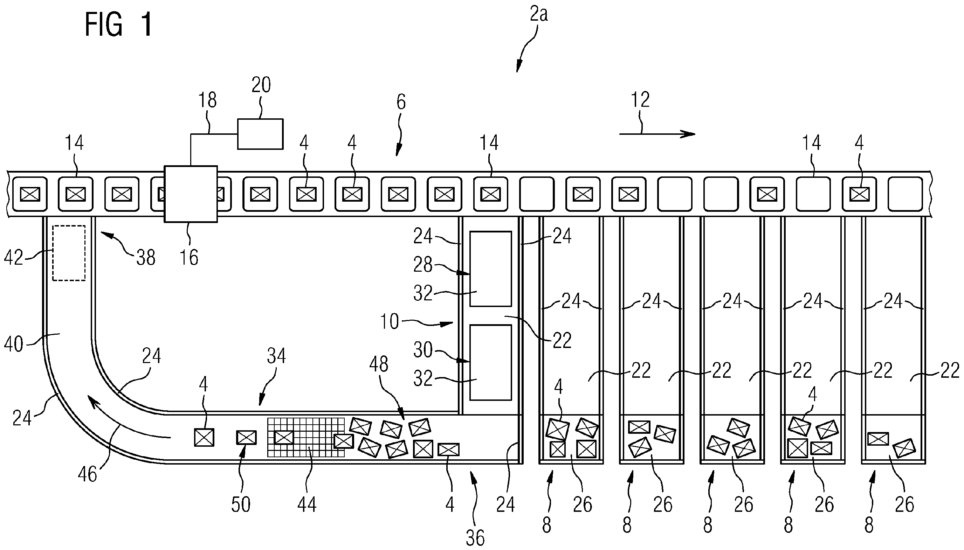

FIG 1 zeigt schematisch einen Teil einer ersten Sortieranlage 2a zum Sortieren von Objekten 4, insbesondere Paketen, in einer Draufsicht.

Die Sortieranlage 2a umfasst einen Sorter 6, mehrere Entnahmeendstellen 8 sowie eine Sammelendstelle 10. In FIG 1 sind die Endstellen 8, 10 zwecks einer besseren Darstellbarkeit voneinander beabstandet abgebildet. Grundsätzlich können die Endstellen 8, 10 ohne Abstand zueinander, sprich aneinander angrenzend, angeordnet sein.

Der Sorter 6 ist dazu eingerichtet, die zu sortierenden Objekte 4 entlang einer Förderrichtung 12 zu transportieren und die Objekte 4 jeweils in eine der Endstellen 8, 10 einzubringen. Im vorliegenden Ausführungsbeispiel ist der Sorter 6 als Kippschalensorter ausgebildet. Der Sorter 6 umfasst also eine Vielzahl von Kippschalen 14 zum Befördern der Objekte 4, wobei die Kippschalen 14 auch dazu dienen, die Objekte 4 jeweils (durch eine Kippbewegung) in eine der Endstellen 8, 10 einzubringen. Alternativ kann der Sorter 6 beispielsweise als Quergurtsorter ausgebildet sein.

Des Weiteren ist der Sorter 6 mit einer Lesevorrichtung 16 ausgestattet. Im Betrieb der Sortieranlage 2a fördert der Sorter 6 die zu sortierenden Objekte 4 entlang der Förderrichtung 12, wobei die auf dem Sorter 6 beförderten Objekte 4 die Lesevorrichtung 16 passieren. Die Lesevorrichtung 16 liest von jedem Objekt 4, das die Lesevorrichtung 16 passiert, eine Sortierinformation, wie zum Beispiel eine Zieladresse, und übermittelt die jeweilige Sortierinformation (beispielsweise über eine Verbindungsleitung 18) an eine Steuereinheit 20 der Sortieranlage 2a. In Abhängigkeit von der jeweiligen Sortierinformation steuert besagte Steuereinheit 20, in welche der Endstellen 8, 10 der Sorter 6 das jeweilige Objekt 4 einbringt.

Die Endstellen 8, 10 umfassen jeweils eine Gleitbahn 22, auf welcher die Objekte 4 hinabgleiten bzw. -rutschen können, sowie zwei an die Gleitbahn 22 grenzende Seitenwände 24, die verhindern sollen, dass die Objekte 4 seitlich von der Gleitbahn 22 herunterfallen können.

Außerdem weisen die Entnahmeendstellen 8 jeweils einen Entnahmetisch 26 auf, auf welchem die in die jeweilige Entnahmeendstelle 8 eingebrachten Objekte 4 zwischengespeichert werden können. Von den Entnahmetischen 26 der Entnahmeendstellen 8 können diese Objekte 4 beispielsweise händisch in Rollbehälter eingeladen und abtransportiert werden.

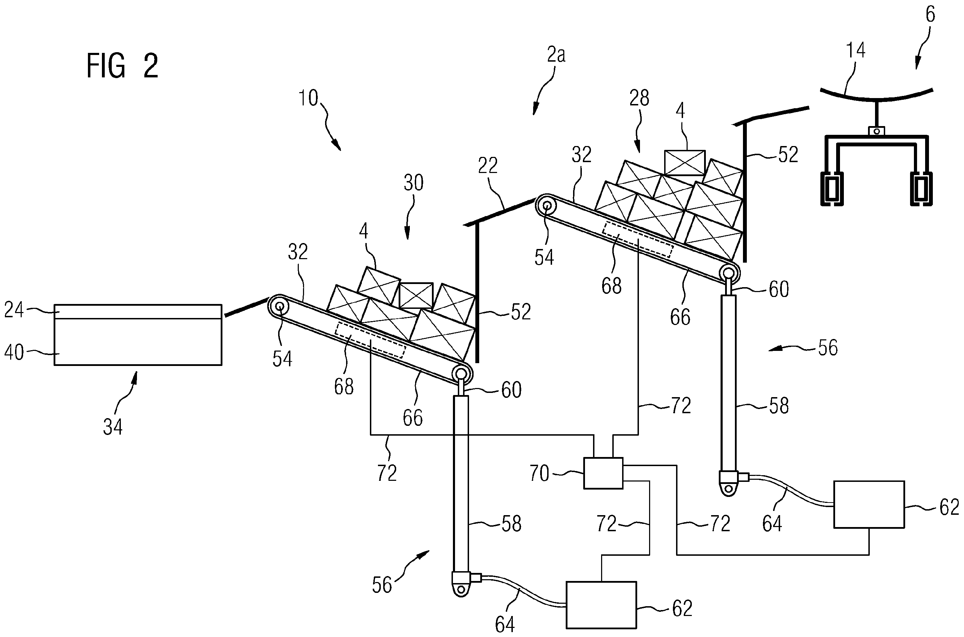

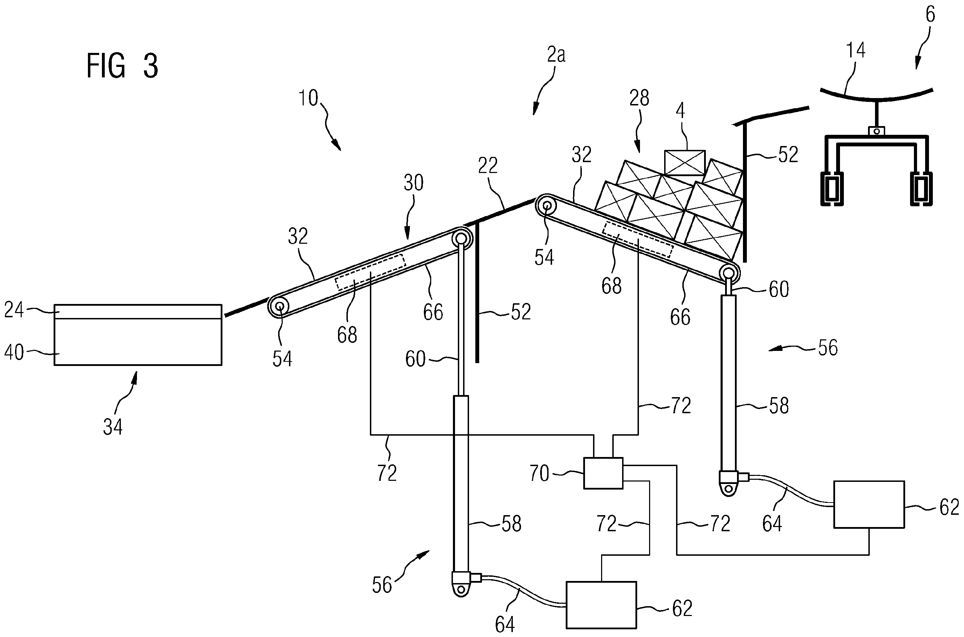

Die Sammelendstelle 10 umfasst einen einlassseitigen Speicherbereich 28 sowie einen auslassseitigen Speicherbereich 30 zur Aufnahme von Objekten 4, wobei die beiden Speicherbereiche 28, 30 jeweils einen anheb- und absenkbaren Boden 32 aufweisen (vgl. FIG 2 und FIG 3). Grundsätzlich können auch die Entnahmeendstellen 8 einen oder mehrere derartige Speicherbereiche aufweisen. In FIG 1 sind solche etwaigen Speicherbereiche der Entnahmeendstellen 8 einer besseren Übersichtlichkeit halber nicht dargestellt.

Weiter umfasst die Sortieranlage 2a eine Transportvorrichtung 34, welche dazu eingerichtet ist, in die Sammelendstelle 10 eingebrachte Objekte 4 automatisch aus der Sammelendstelle 10 abzutransportieren und diese Objekte 4 automatisch zum Sorter 6 zurückzubringen.

Die Transportvorrichtung 34 umfasst einen Objekteinlassabschnitt 36, der an der Sammelendstelle 10 angeordnet ist, sowie einen Objektauslassabschnitt 38, der - bezogen auf die Förderrichtung 12 des Sorters 6 - an einem vor der Lesevorrichtung 16 angeordneten Abschnitt des Sorters 6 angeordnet ist und auf einem höheren Niveau angeordnet ist als der Objekteinlassabschnitt 36. Außerdem umfasst die Transportvorrichtung 34 einen höhengängigen Förderer 40 mit einem Förderantrieb 42, insbesondere einem Elektromotor, sowie an den Förderer 40 grenzende Seitenwände 24. Der Förderer 40 der Transportvorrichtung 34 kann beispielsweise als Rollenförderer ausgebildet sein, wobei grundsätzlich auch andere Ausgestaltungen des Förderers 40 möglich sind. Darüber hinaus weist die Transportvorrichtung 34 einen Singulator 44 zum Vereinzeln von Objekten 4 auf.

Im Betrieb der Sortieranlage 2a werden die auf dem Sorter 6 beförderten Objekte 4 in einem ersten Verteildurchlauf vom Sorter 6 in die Endstellen 8, 10 eingebracht. Beim ersten Verteildurchlauf sind den Entnahmeendstellen 8 vorgegebene Zielgebiete zugeordnet. Diejenigen Objekte 4, deren Zieladresse nicht innerhalb eines dieser Zielgebiete liegt, werden in die Sammelendstelle 10 eingebracht. Die anderen Objekte 4 werden gemäß ihren Zieladressen jeweils in die zugehörige Entnahmeendstelle 8 eingebracht.

Die in die Sammelendstelle 10 eingebrachten Objekte 4 werden in mindestens einem der beiden Speicherbereiche 28, 30 der Sammelendstelle 10 temporär gespeichert, während die Entnahmeendstellen 8 entladen werden.

Für einen zweiten Verteildurchlauf, bei dem den Entnahmeendstellen 8 andere vorgegebene Zielgebiete zugeordnet sind als beim ersten Verteildurchlauf, werden die in die Sammelendstelle 10 eingebrachten Objekte 4 dann von der Transportvorrichtung 34 unmittelbar zum Sorter 6 zurückgebracht. Hierbei nimmt die Transportvorrichtung 34 an ihrem Objekteinlassabschnitt 36 die Objekte 4 aus der Sammelendstelle 10 auf und fördert diese Objekte 4 mittels ihres Förderers 40 entlang einer Förderrichtung 46 zu ihrem Objektauslassabschnitt 38, von wo aus die Transportvorrichtung 34 diese Objekte 4 an den Sorter 6 übergibt.

Diejenigen Objekte 4, die mittels der Transportvorrichtung 34 aus der Sammelendstelle 10 abtransportiert werden, werden zunächst als Massenstrom 48 aus der Sammelendstelle 10 abtransportiert. Mithilfe des Singulators 44 der Transportvorrichtung 34 wird der Massenstrom 48 in einen vereinzelten Strom 50 von Objekten 4 umgewandelt. Auf diese Weise wird sichergestellt, dass auf die Kippschalen 14 des Sorters 6 jeweils höchstens ein Objekt 4 gelangt.

Die Lesevorrichtung 16 liest von dem jeweiligen zum Sorter 6 zurückgebrachten Objekt 4 dessen Sortierinformation. In Abhängigkeit von der Sortierinformation des jeweiligen zum Sorter 6 zurückgebrachten Objekts 4 bringt der Sorter 6 das jeweilige Objekt 4 im zweiten Verteildurchlauf in eine der Endstellen 8, 10 ein. Abhängig von der Anzahl der für die gewünschte Feinverteilung der Objekte 4 benötigten Entnahmeendstellen 8 werden die zum Sorter zurückgebrachten Objekte 4 im zweiten Verteildurchlauf vom Sorter 6 entweder nur auf die (zwischenzeitlich freigewordenen) Entnahmeendstellen 8 oder sowohl auf die Entnahmeendstellen 8 als auch auf die Sammelendstelle 10 verteilt.

Objekte 4, die im zweiten Verteildurchlauf vom Sorter 6 in die Sammelendstelle 10 eingebracht werden, können gegebenenfalls für einen dritten Verteildurchlauf mittels der Transportvorrichtung 34 automatisch aus der Sammelendstelle 10 abtransportiert und automatisch zum Sorter 6 zurückgebracht werden. Je nach Bedarf an Endstellen 8, 10 für die gewünschte Feinverteilung der Objekte 4 kann der oben beschriebene Sortier-/Verteilvorgang gegebenenfalls ein oder mehrere weitere Male wiederholt werden.

FIG 2 zeigt schematisch die erste Sortieranlage 2a in einer Seitenansicht. In FIG 2 sind die Sammelendstelle 10, der Sorter 6 sowie die Transportvorrichtung 34 der ersten Sortieranlage 2a abgebildet. Einer besseren Übersichtlichkeit halber sind die zuvor erwähnten Seitenwände 24 der Sammelendstelle 10 in FIG 2 nicht dargestellt.

Wie zuvor erwähnt, umfasst die Sammelendstelle 10 einen einlassseitigen Speicherbereich 28 sowie einen auslassseitigen Speicherbereich 30, die jeweils einen anheb- und absenkbaren Boden 32 aufweisen. Jeder der beiden Speicherbereiche 28, 30 ist durch eine Rückstauwand 52 begrenzt.

Im vorliegenden Ausführungsbeispiel sind der anheb- und absenkbare Boden 32 des einlassseitigen Speicherbereichs 28 sowie der anheb- und absenkbare Boden 32 des auslassseitigen Speicherbereichs 30 jeweils um eine Schwenkachse 54 schwenkbar gelagert, wobei die jeweilige Schwenkachse 54 senkrecht zur Zeichenebene von FIG 2 steht.

Für jeden der beiden Speicherbereiche 28, 30 weist die Sammelendstelle 10 einen eigenen Schwenkmechanismus 56 zum Schwenken des jeweiligen anheb- und absenkbaren Bodens 32 auf. Der jeweilige Schwenkmechanismus 56 umfasst ein figürlich nicht dargestelltes Schwenklager, an welchem der jeweilige anheb- und absenkbare Boden 32 befestigt ist, sowie einen schwenkbar gelagerten Hubzylinder 58, auf welchem der jeweilige anheb- und absenkbare Boden 32 abgestützt ist und der eine ein- und ausfahrbare Kolbenstange 60 aufweist.

Vorliegend ist der Hubzylinder 58 des jeweiligen Schwenkmechanismus 56 als Fluidzylinder ausgebildet. Das heißt, die Stellung der Kolbenstange 60 des jeweiligen Hubzylinders 58 ist mittels eines (Steuer-)Fluids steuerbar. Zur Einstellung des Fluiddrucks in seinem Hubzylinder 58 weist der jeweilige Schwenkmechanismus 56 eine Fluidpumpe 62 auf, die mittels einer Fluidleitung 64 mit dem Hubzylinder 58 des jeweiligen Schwenkmechanismus 56 verbunden ist.

Der anheb- und absenkbare Boden 32 des auslassseitigen Speicherbereichs 30 sowie der anheb- und absenkbare Boden 32 des einlassseitigen Speicherbereichs 28 sind jeweils mit einer Fördereinheit 66 ausgestattet. Vorliegend ist die jeweilige Fördereinheit 66 als ein mit einem elektrischen Förderantrieb 68 ausgestatteter Gurtbandförderer ausgebildet. Grundsätzlich sind auch andere Ausgestaltungen der beiden Fördereinheiten 66 möglich.

Weiter umfasst die Sammelendstelle 10 ein Steuergerät 70 zum Steuern der Fluidpumpen 62 sowie zum Steuern der besagten Fördereinheiten 66. Dieses Steuergerät 70 ist vorzugsweise über Steuerleitungen 72 mit den Fördereinheiten 66 sowie den Fluidpumpen 62 verbunden. Alternativ kann vorgesehen sein, dass das Steuergerät 70 die Fördereinheiten 66 und/oder die Fluidpumpen 62 über Funksignale steuert.

In FIG 2 ist die Sammelendstelle 10 in einem Zustand abgebildet, in welchem sich der anheb- und absenkbare Boden 32 des auslassseitigen Speicherbereichs 30 sowie der anheb- und absenkbare Boden 32 des einlassseitigen Speicherbereichs 28 jeweils in einer abgesenkten Stellung befinden. Ferner befinden sich auf dem anheb- und absenkbaren Boden 32 des auslassseitigen Speicherbereichs 30 sowie auf dem anheb- und absenkbaren Boden 32 des einlassseitigen Speicherbereichs 28 jeweils mehrere Objekte 4. Das heißt, der jeweilige anheb- und absenkbaren Boden 32 dient als Speicher für Objekte 4.

Um die beiden Speicherbereiche 28, 30 zu entleeren, wird zunächst die Fördereinheit 66 des anheb- und absenkbaren Bodens 32 des auslassseitigen Speicherbereichs 30 vom Steuergerät 70 der Sammelendstelle 10 derart gesteuert, dass die Objekte 4 aus dem auslassseitigen Speicherbereich 30 von dieser Fördereinheit 66 zur Transportvorrichtung 34 befördert werden.

Ferner wird der anheb- und absenkbare Boden 32 des auslassseitigen Speicherbereichs 30 mithilfe des zugehörigen Schwenkmechanismus 56 angehoben (vorliegend also nach oben geschwenkt), um die Objekte 4 aus dem einlassseitigen Speicherbereich 28 über den anheb- und absenkbaren Boden 32 des auslassseitigen Speicherbereichs 30 zur Transportvorrichtung 34 befördern zu können, ohne dass diese Objekte 4 von der Gleitbahn 22 der Sammelendstelle 10 nach unten (in den auslassseitigen Speicherbereich 30) fallen. Hierbei steuert das Steuergerät 70 der Sammelendstelle 10 die entsprechende Fluidpumpe 62 derart, dass die Fluidpumpe 62 den Fluiddruck im entsprechenden Hubzylinder 58 so verändert, dass dessen Kolbenstange 60 ausgefahren wird.

Wenn sich der anheb- und absenkbare Boden 32 des auslassseitigen Speicherbereichs 30 in seiner höchsten Stellung befindet (vgl. FIG 3), wird die Fördereinheit 66 des anheb- und absenkbaren Bodens 32 des einlassseitigen Speicherbereichs 28 vom Steuergerät 70 der Sammelendstelle 10 derart gesteuert, dass die Objekte 4 aus dem einlassseitigen Speicherbereich 70 von dieser Fördereinheit 66 zur Transportvorrichtung 34 befördert werden.

FIG 3 zeigt schematisch die erste Sortieranlage 2a in derselben Ansicht wie in FIG 2. Jedoch befindet sich die Sortieranlage 2a, genauer gesagt deren Sammelendstelle 10, in einem anderen Zustand als in FIG 2.

In FIG 3 ist der auslassseitige Speicherbereich 30 der Sammelendstelle 10 entleert (d. h. es befinden sich keine Objekte im auslassseitigen Speicherbereich 30) und der anheb- und absenkbare Boden 32 des auslassseitigen Speicherbereichs 30 befindet sich in seiner höchsten Stellung. In diesem Zustand können Objekte 4 aus dem einlassseitigen Speicherbereich 28 über den anheb- und absenkbaren Boden 32 des auslassseitigen Speicherbereichs 30 zur Transportvorrichtung befördern zu können, ohne dass diese Objekte 4 von der Gleitbahn 22 der Sammelendstelle 10 nach unten (in den auslassseitigen Speicherbereich 30) fallen.

Die Beschreibung des nachfolgenden Ausführungsbeispiels beschränkt sich primär auf die Unterschiede zum vorhergehenden Ausführungsbeispiel, auf das bezüglich gleicher Merkmale und Funktionen verwiesen wird. Gleiche und/oder einander entsprechende Elemente sind, soweit zweckdienlich, mit den gleichen Bezugszeichen bezeichnet. Merkmale des vorhergehenden Ausführungsbeispiels sind im nachfolgenden Ausführungsbeispiel übernommen, ohne dass sie erneut beschrieben werden.

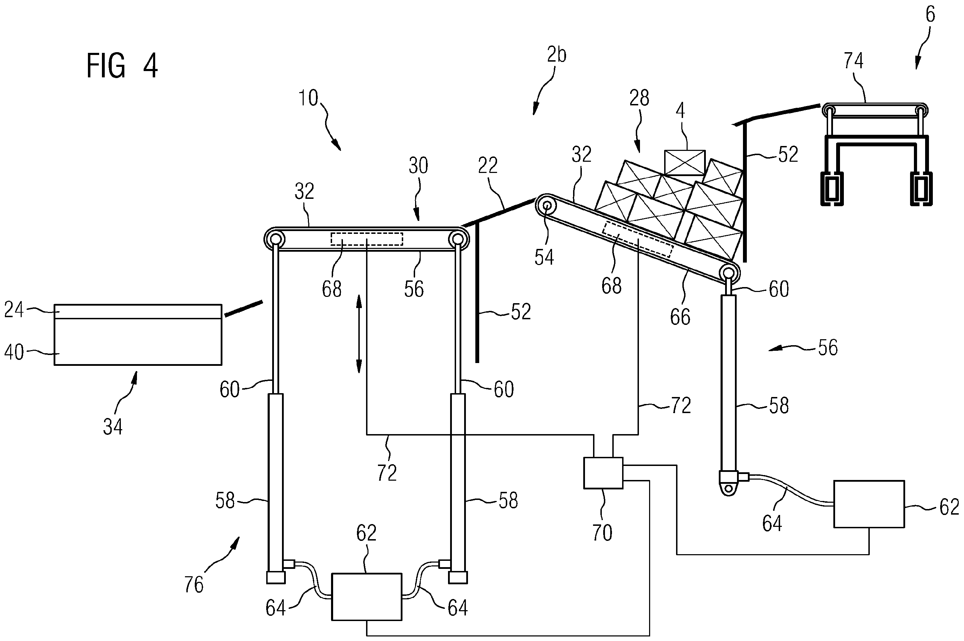

FIG 4 zeigt schematisch einen Teil einer zweiten Sortieranlage 2b zum Sortieren von Objekten 4 in einer Seitenansicht.

Von der zweiten Sortieranlage 2b sind in FIG 4 ein Sorter 6, eine Sammelendstelle 10 sowie eine Transportvorrichtung 34, die zum automatischen Abtransportieren von Objekten 4 aus der Sammelendstelle 10 und zum automatischen Zurückbringen dieser Objekte 4 zum Sorter 6 eingerichtet ist, abgebildet. Zusätzlich zu diesen Elementen umfasst die zweite Sortieranlage 2b mehrere figürlich nicht dargestellte Entnahmeendstellen.

Die zweite Sortieranlage 2b entspricht im Wesentlichen der ersten Sortieranlage 2a (vgl. FIG 1 bis FIG 3). Allerdings ist der Sorter 6 der zweiten Sortieranlage 2b nicht als Kippschalensorter, sondern als Quergurtsorter ausgebildet. Anstelle von Kippschalen weist der Sorter 6 der zweiten Sortieranlage 2b mehrere Quergurte 74 zum Einbringen von Objekten 4 in die Endstellen 8, 10 auf, wobei in FIG 4 nur einer der Quergurte 74 sichtbar ist. Alternativ ist (auch) bei der zweiten Sortieranlage 2b eine Ausgestaltung des Sorters 6 als Kippschalensorter möglich.

Ferner unterscheidet sich die Sammelendstelle 10 der zweiten Sortieranlage 2b dadurch von der Sammelendstelle 10 der ersten Sortieranlage 2a (vgl. insbesondere FIG 2 und FIG 3), dass bei der Sammelendstelle 10 der zweiten Sortieranlage 2b der anheb- und absenkbare Boden 32 des auslassseitigen Speicherbereichs 30 nicht schwenkbar gelagert, sondern translatorisch höhenverstellbar gelagert ist.

Für den auslassseitigen Speicherbereich 30 weist die Sammelendstelle 10 der zweiten Sortieranlage 2b anstelle eines Schwenkmechanismus einen Hubmechanismus 76 auf, mittels welchem sich der anheb- und absenkbare Boden 32 des auslassseitigen Speicherbereichs 30 translatorisch anheben und absenken lässt. In FIG 4 befindet sich der anheb- und absenkbare Boden 32 des auslassseitigen Speicherbereichs 30 in seiner höchsten Position.

Der Hubmechanismus 76 für den auslassseitigen Speicherbereich 30 umfasst mehrere (nicht schwenkbar gelagerte) Hubzylinder 58, die mittels eines (Steuer-)Fluids steuerbar sind, sowie eine von einem Steuergerät 70 der Sammelendstelle 10 gesteuerte Fluidpumpe 62, die über die Fluidleitungen 64 mit diesen Hubzylindern 58 verbunden ist.

Grundsätzlich ist es möglich, dass anstelle des anheb- und absenkbaren Bodens 32 des auslassseitigen Speicherbereichs 30 oder zusätzlich zum anheb- und absenkbaren Boden 32 des auslassseitigen Speicherbereichs 30 (auch) der anheb- und absenkbare Boden 32 des einlassseitigen Speicherbereichs 28 translatorisch höhenverstellbar gelagert ist und die Sammelendstelle 10 für den einlassseitigen Speicherbereich 28 (anstatt des Schwenkmechanismus 56) einen Hubmechanismus aufweist.

Das Einbringen von Objekten 4 vom Sorter 6 in die Sammelendstelle 10 (sowie in die figürlich nicht dargestellten Entnahmeendstellen) der zweiten Sortieranlage 2b erfolgt analog wie bei der ersten Sortieranlage 2a. Auch der Abtransport von Objekten 4 aus der Sammelendstelle 10 und das Zurückbringen dieser Objekte 4 zum Sorter 6 mittels der Transportvorrichtung 34 erfolgt analog wie bei erster Sortieranlage 2a.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste

- 2a: Sortieranlage
- 2b: Sortieranlage
- 4: Objekt
- 6: Sorter
- 8: Entnahmeendstelle
- 10: Sammelendstelle
- 12: Förderrichtung
- 14: Kippschale
- 16: Lesevorrichtung
- 18: Verbindungsleitung
- 20: Steuereinheit
- 22: Gleitbahn
- 24: Seitenwand
- 26: Entnahmetisch
- 28: Speicherbereich
- 30: Speicherbereich
- 32: Boden
- 34: Transportvorrichtung
- 36: Objekteinlassabschnitt
- 38: Objektauslassabschnitt
- 40: Förderer
- 42: Förderantrieb
- 44: Singulator
- 46: Förderrichtung
- 48: Massenstrom
- 50: vereinzelter Strom
- 52: Rückstauwand
- 54: Schwenkachse
- 56: Schwenkmechanismus
- 58: Hubzylinder
- 60: Kolbenstange
- 62: Fluidpumpe
- 64: Fluidleitung
- 66: Fördereinheit
- 68: Förderantrieb
- 70: Steuergerät
- 72: Steuerleitung
- 74: Quergurt
- 76: Hubmechanismus

## Patentansprüche

1. Verfahren zum Sortieren von Objekten (4) in einer Sortieranlage (2a, 2b) nach einem der Ansprüche 10 bis 15, bei dem Objekte (4) auf einem Sorter (6) der Sortieranlage (2a, 2b) befördert werden, in einem ersten Verteildurchlauf einige der auf dem Sorter (6) beförderten Objekte (4) vom Sorter (6) in Entnahmeendstellen (8) der Sortieranlage (2a, 2b) und andere der auf dem Sorter (6) beförderten Objekte (4) vom Sorter (6) in eine Sammelendstelle (10) der Sortieranlage (2a, 2b) eingebracht werden und mittels einer Transportvorrichtung (34) der Sortieranlage (2a, 2b) Objekte (4) aus der Sammelendstelle (10) automatisch abtransportiert und automatisch zum Sorter (6) zurückgebracht werden, wobei die mittels der Transportvorrichtung (34) aus der Sammelendstelle (10) zum Sorter zurückgebrachten Objekte (4) in einem zweiten Verteildurchlauf vom Sorter (6) jeweils in eine der Endstellen (8, 10) eingebracht werden.

2. Verfahren nach Anspruch 1,
**dadurch gekennzeichnet, dass** den Entnahmeendstellen (8) beim ersten Verteildurchlauf vorgegebene Zielgebiete zugeordnet sind und einigen oder allen der Entnahmeendstellen (8) beim zweiten Verteildurchlauf andere vorgegebene Zielgebiete als beim ersten Verteildurchlauf zugeordnet sind.

3. Verfahren nach Anspruch 1 oder 2,
**dadurch gekennzeichnet, dass** einige oder alle der mittels der Transportvorrichtung (34) zum Sorter (6) zurückgebrachten Objekte (4) im zweiten Verteildurchlauf vom Sorter (6) in die Entnahmeendstellen (8) eingebracht werden.

4. Verfahren nach einem der voranstehenden Ansprüche, **dadurch gekennzeichnet, dass** einige oder alle der Entnahmeendstellen (8) entladen werden, bevor die aus der Sammelendstelle (10) zum Sorter (6) zurückgebrachten Objekte (4) im zweiten Verteildurchlauf vom Sorter (6) in die Entnahmeendstellen (8) eingebracht werden.

5. Verfahren nach einem der voranstehenden Ansprüche, **dadurch gekennzeichnet, dass** die aus der Sammelendstelle (10) abtransportierten Objekte (4) von der Transportvorrichtung (34) unmittelbar zum Sorter (6) zurückgebracht werden.

6. Verfahren nach einem der voranstehenden Ansprüche, **dadurch gekennzeichnet, dass** von einer Lesevorrichtung (16) der Sortieranlage (2a, 2b) eine Sortierinformation des jeweiligen aus der Sammelendstelle (10) abtransportierten Objekts (4) gelesen wird, bevor dieses Objekt (4) im zweiten Verteildurchlauf vom Sorter (6) in eine der Endstellen (8, 10) eingebracht wird.

7. Verfahren nach Anspruch 6,
**dadurch gekennzeichnet, dass** die Sortierinformation des jeweiligen aus der Sammelendstelle (10) abtransportierten Objekts (4) gelesen wird, wenn sich das jeweilige Objekt (4) auf dem Sorter (6) befindet.

8. Verfahren nach einem der voranstehenden Ansprüche, **dadurch gekennzeichnet, dass** diejenigen Objekte (4), die mittels der Transportvorrichtung (34) aus der Sammelendstelle (10) abtransportiert werden, zunächst als Massenstrom (48) aus der Sammelendstelle (10) abtransportiert werden und der Massenstrom (48) mittels eines Singulators (44) in einen vereinzelten Strom (50) von Objekten (4) umgewandelt wird.

9. Verfahren nach einem der voranstehenden Ansprüche, **dadurch gekennzeichnet, dass** in die Sammelendstelle (10) eingebrachte Objekte (4) in einem Speicherbereich (28, 30) der Sammelendstelle (10) temporär gespeichert und anschließend für den zweiten Verteildurchlauf von einer Fördereinheit (66) der Sammelendstelle (10) automatisch zur Transportvorrichtung (34) befördert werden.

10. Sortieranlage (2a, 2b) zum Sortieren von Objekten (4), umfassend mehrere Entnahmeendstellen (8), eine Sammelendstelle (10), einen Sorter (6) zum Fördern von Objekten (4), welcher dazu eingerichtet ist, auf dem Sorter (6) beförderte Objekte (4) jeweils in eine der Endstellen (8, 10) einzubringen, und eine Transportvorrichtung (34) zum automatischen Abtransportieren von Objekten (4) aus der Sammelendstelle (10) sowie zum automatischen Zurückbringen dieser Objekte (4) zum Sorter (6), wobei Objekte (4) aus der Sammelendstelle (10) mittels der Transportvorrichtung (34) zu einem Abschnitt des Sorters (6) bringbar sind, von dem aus diese Objekte (4) vom Sorter (6) jeweils in eine der Endstellen (8, 10) einbringbar sind;
**dadurch gekennzeichnet, dass** die Transportvorrichtung (34) einen Objekteinlassabschnitt (36) und einen Objektauslassabschnitt (38) aufweist, wobei der Objektauslassabschnitt (38) auf einem höheren Niveau als der Objekteinlassabschnitt (36) angeordnet ist und die Transportvorrichtung (34) einen höhengängigen Förderer (40) mit einem Förderantrieb (42) umfasst.

11. Sortieranlage (2a, 2b) nach Anspruch 10,
**dadurch gekennzeichnet, dass** die Transportvorrichtung (34) einen Singulator (44) zum Vereinzeln von Objekten (4) aufweist.

12. Sortieranlage (2a, 2b) nach Anspruch 10 oder 11,
**dadurch gekennzeichnet, dass** der Sorter (6) eine Lesevorrichtung (16) zum Lesen einer Sortierinformation eines Objekt (4) aufweist.

13. Sortieranlage (2a, 2b) nach einem der Ansprüche 10 bis 12,
**dadurch gekennzeichnet, dass** die Transportvorrichtung (34) dazu eingerichtet ist, Objekte aus der Sammelendstelle (10) unmittelbar zum Sorter (6) zurückzubringen.

14. Sortieranlage (2a, 2b) nach einem der Ansprüche 10 bis 13,
**dadurch gekennzeichnet, dass** die Sammelendstelle (10) mindestens einen Speicherbereich (28, 30) zur Aufnahme von Objekten (4) aufweist, der einen anheb- und absenkbaren Boden (32) umfasst, wobei der anheb- und absenkbare Boden (32) eine Fördereinheit (66) zum Fördern von Objekten (4) zu der Transportvorrichtung (34) umfasst.

## Claims

1. Method for sorting objects (4) in a sorting installation (2a, 2b) according to one of claims 10 to 15, in which objects (4) are conveyed on a sorter (6) of the sorting installation (2a, 2b), in a first distributing run some of the objects (4) conveyed on the sorter (6) are introduced from the sorter (6) into extraction terminal points (8) of the sorting installation (2a, 2b) and other objects of the objects (4) conveyed on the sorter (6) are introduced from the sorter (6) into a collection terminal point (10) of the sorting installation (2a, 2b) and, by means of a transport apparatus (34) of the sorting installation (2a, 2b), objects (4) are automatically transported out of the collection terminal point (10) and are automatically returned to the sorter (6), wherein the objects (4) returned from the collection terminal point (10) to the sorter by means of the transport apparatus (34) are introduced from the sorter (6) into one of the terminal points (8, 10) in each case in a second distributing run.

2. Method according to claim 1,
**characterised in that** during the first distributing run the extraction terminal points (8) are assigned predefined destination regions, and during the second distributing run some or all of the extraction terminal points (8) are assigned other predefined destination regions than those in the first distributing run.

3. Method according to claim 1 or 2,
**characterised in that** some or all of the objects (4) returned to the sorter (6) by means of the transport apparatus (34) are introduced from the sorter (6) into the extraction terminal points (8) in the second distributing run.

4. Method according to one of the preceding claims, **characterised in that** some or all of the extraction terminal points (8) are unloaded before the objects (4) returned from the collection terminal point (10) to the sorter (6) are introduced from the sorter (6) into the extraction terminal points (8) in the second distributing run.

5. Method according to one of the preceding claims, **characterised in that** the objects (4) transported from the collection terminal point (10) are returned directly from the transport apparatus (34) to the sorter (6).

6. Method according to one of the preceding claims, **characterised in that** an item of sorting information of the respective object (4) transported out of the collection terminal point (10) is read from a reading apparatus (16) of the sorting installation (2a, 2b) before said object (4) is introduced into one of the terminal points (8, 10) in the second distributing run.

7. Method according to claim 6,
**characterised in that** the sorting information of the respective object (4) transported out of the collection terminal point (10) is read when the respective object (4) is located on the sorter (6).

8. Method according to one of the preceding claims, **characterised in that** the objects (4) that are transported out of the collection terminal point (10) by means of the transport apparatus (34) are first transported out of the collection terminal point (10) as a mass flow (48) and the mass flow (48) is converted into an isolated flow (50) of objects (4) by means of a singulator (44).

9. Method according to one of the preceding claims, **characterised in that** objects (4) introduced into the collection terminal point (10) are temporarily stored in a storage region (28, 30) of the collection terminal point (10) and are subsequently automatically conveyed from a conveying unit (66) of the collection terminal point (10) to the transport apparatus (34) for the second distributing run.

10. Sorting installation (2a, 2b) for sorting objects (4), comprising a plurality of extraction terminal points (8), a collection terminal point (10), a sorter (6) for conveying objects (4), which is configured to introduce objects (4) conveyed on the sorter (6) into one of the terminal points (8, 10) in each case, and a transport apparatus (34) for automatically transporting objects (4) out of the collection terminal point (10) as well as for automatically returning said objects (4) to the sorter (6), wherein objects (4) can be brought from the collection terminal point (10), by means of the transport apparatus (34), to a section of the sorter (6), from which said objects (4) can be introduced from the sorter (6) into one of the terminal points (8, 10) in each case; **characterised in that** the transport apparatus (34) has an object intake section (36) and an object outlet section (38), wherein the object outlet section (38) is arranged at a higher level than the object inlet section (36) and the transport apparatus (34) comprises an upward conveyor (40) with a conveyor drive (42).

11. Sorting installation (2a, 2b) according to claim 10, **characterised in that** the transport apparatus (34) has a singulator (44) for isolating objects (4).

12. Sorting installation (2a, 2b) according to claim 10 or 11, **characterised in that** the sorter (6) has a reading apparatus (16) for reading an item of sorting installation of an object (4) .

13. Sorting installation (2a, 2b) according to one of claims 10 to 12,
**characterised in that** the transport apparatus (34) is configured to return objects directly from the collection terminal point (10) to the sorter (6).

14. Sorting installation (2a, 2b) according to one of claims 10 to 13,
**characterised in that** the collection terminal point (10) has at least one storage region (28, 30) for accommodating objects (4), which comprises a bottom (32) that can be raised and lowered, wherein the bottom (32) that can be raised and lowered comprises a conveying unit (66) for conveying objects (4) to the transport apparatus (34).

## Revendications

1. Procédé de tri d'objets (4) dans une installation de tri (2a, 2b) selon l'une quelconque des revendications 10 à 15, dans lequel des objets (4) sont convoyés sur un trieur (6) de l'installation de tri (2a, 2b) et, lors d'un premier cycle de répartition, certains des objets (4) convoyés sur le trieur (6) sont placés par le trieur (6) dans des emplacements finaux de prélèvement (8) de l'installation de tri (2a, 2b) et d'autres objets (4) convoyés sur le trieur (6) sont placés par le trieur (6) dans un emplacement final de collecte (10) de l'installation de tri (2a, 2b) et des objets (4) sont déplacés de manière automatique au moyen d'un dispositif de transport (34) de l'installation de tri (2a, 2b) à partir de l'emplacement final de collecte (10) et ramenés de manière automatique au trieur (6), dans lequel, lors d'un second cycle de répartition, les objets (4) ramenés de l'emplacement final de collecte (10) au trieur au moyen du dispositif de transport (34) sont placés par le trieur (6) respectivement dans l'un des emplacements finaux (8, 10).

2. Procédé selon la revendication 1,
**caractérisé en ce que** des zones de destination prédéfinies sont associées aux emplacements finaux de prélèvement (8) lors du premier cycle de répartition et **en ce que** d'autres zones de destination prédéfinies différentes de celles du premier cycle de répartition sont associées à certains ou à la totalité des emplacements finaux de prélèvement (8) lors du second cycle de répartition.

3. Procédé selon la revendication 1 ou 2,
**caractérisé en ce que** certains ou la totalité des objets (4) ramenés au trieur (6) au moyen du dispositif de transport (34) sont placés dans les emplacements finaux de prélèvement (8) par le trieur (6) lors du second cycle de répartition.

4. Procédé selon l'une quelconque des revendications précédentes,
**caractérisé en ce que** certains ou la totalité des emplacements finaux de prélèvement (8) sont déchargés avant que les objets (4) ramenés de l'emplacement final de collecte (10) au trieur (6) ne soient placés dans les emplacements finaux de prélèvement (8) par le trieur (6) lors du second cycle de répartition.

5. Procédé selon l'une quelconque des revendications précédentes,
**caractérisé en ce que** les objets (4) déplacés à partir de l'emplacement final de collecte (10) sont ramenés directement au trieur (6) par le dispositif de transport (34).

6. Procédé selon l'une quelconque des revendications précédentes,
**caractérisé en ce qu'**une information de tri de l'objet (4) respectif déplacé à partir de l'emplacement final de collecte (10) est lue par un dispositif de lecture (16) de l'installation de tri (2a, 2b) avant que ledit objet (4) ne soit placé par le trieur (6) dans l'un des emplacement finaux (8, 10) lors du second cycle de répartition .

7. Procédé selon la revendication 6,
**caractérisé en ce que** l'information de tri de l'objet (4) respectif déplacé à partir de l'emplacement final de collecte (10) est lue lorsque l'objet (4) respectif se trouve sur le trieur (6).

8. Procédé selon l'une quelconque des revendications précédentes,
**caractérisé en ce que** les objets (4) qui sont déplacés à partir de l'emplacement final de collecte (10) au moyen du dispositif de transport (34) sont tout d'abord déplacés à partir de l'emplacement final de collecte (10) sous forme de flux en masse (48) et le flux en masse (48) est converti en un flux différencié (50) d'objets (4) au moyen d'un séparateur (44).

9. Procédé selon l'une quelconque des revendications précédentes,
**caractérisé en ce que** des objets (4) placés dans l'emplacement final de collecte (10) sont stockés de manière temporaire dans une zone de stockage (28, 30) de l'emplacement final de collecte (10) et sont ensuite convoyés de manière automatique vers le dispositif de transport (34) par une unité de convoyage (66) de l'emplacement final de collecte (10) en vue du second cycle de répartition.

10. Installation de tri (2a, 2b) permettant de trier des objets (4), comprenant plusieurs emplacements finaux de prélèvement (8), un emplacement final de collecte (10), un trieur (6) permettant le convoyage d'objets (4) et conçu afin de placer des objets (4) convoyés sur le trieur (6) respectivement dans l'un des emplacements finaux (8, 10), et un dispositif de transport (34) permettant de déplacer de manière automatique des objets (4) à partir de l'emplacement final de collecte (10) et de ramener de manière automatique lesdits objets (4) vers le trieur (6), dans laquelle des objets (4) peuvent être amenés, au moyen du dispositif de transport (34), de l'emplacement final de collecte (10) vers une section du trieur (6) à partir de laquelle lesdits objets (4) peuvent être placés par le trieur (6) respectivement dans l'un des emplacements finaux (8, 10) ;
**caractérisée en ce que** le dispositif de transport (34) présente une section d'entrée d'objet (36) et une section de sortie d'objet (38), dans laquelle la section de sortie d'objet (38) est agencée à un niveau plus élevé que la section d'entrée d'objet (36) et le dispositif de transport (34) comprend un convoyeur en hauteur (40) comprenant un entraînement de convoyage (42).

11. Installation de tri (2a, 2b) selon la revendication 10,
**caractérisée en ce que** le dispositif de transport (34) présente un séparateur (44) permettant de différencier les objets (4).

12. Installation de tri (2a, 2b) selon la revendication 10 ou 11,
**caractérisée en ce que** le trieur (6) présente un dispositif de lecture (16) permettant de lire une information de tri d'un objet (4).

13. Installation de tri (2a, 2b) selon l'une quelconque des revendications 10 à 12,
**caractérisée en ce que** le dispositif de transport (34) est conçu afin de ramener directement des objets au trieur (6) à partir de l'emplacement final de collecte (10).

14. Installation de tri (2a, 2b) selon l'une quelconque des revendications 10 à 13,
**caractérisée en ce que** l'emplacement final de collecte (10) présente au moins une zone de stockage (28, 30) permettant d'accueillir des objets (4) et comprenant un fond pouvant être soulevé et abaissé (32), dans laquelle le fond pouvant être soulevé et abaissé (32) comprend une unité de convoyage (66) permettant de convoyer des objets (4) vers le dispositif de transport (34).
